Europäisches Patentamt

European Patent Office

Office européen des brevets

(19)

(11) **EP 1 547 979 A1**

(12) ## EUROPEAN PATENT APPLICATION

(43) Date of publication:
**29.06.2005 Bulletin 2005/26**

(51) Int Cl.⁷: **C02F 1/68**, A23L 2/68, C02F 1/461

(21) Application number: **04028074.5**

(22) Date of filing: **20.06.2003**

(84) Designated Contracting States:
**AT BE BG CH CY CZ DE DK EE ES FI FR GB GR HU IE IT LI LU MC NL PT RO SE SI SK TR**

(30) Priority: **21.06.2002 JP 2002181523**
**28.08.2002 JP 2002248426**

(62) Document number(s) of the earlier application(s) in accordance with Art. 76 EPC:
**03253914.0 / 1 382 574**

(71) Applicant: **Sanden Corporation**
**Isesaki-shi, Gunma 372-8502 (JP)**

(72) Inventors:
• **Ito, Miwako**
**Isesaki-shi Gunma 372-8502 (JP)**

• **Watanabe, Kazushige**
**Isesaki-shi Gunma 372-8502 (JP)**
• **Sato, Motoharu**
**Isesaki-shi Gunma 372-8502 (JP)**

(74) Representative: **Haley, Stephen**
**Gill Jennings & Every,**
**Broadgate House,**
**7 Eldon Street**
**London EC2M 7LH (GB)**

Remarks:
This application was filed on 26 - 11 - 2004 as a divisional application to the application mentioned under INID code 62.

(54) **Mineral water making apparatus**

(57) The mineral water making apparatus has a structure that includes a water tank 10 having a mineral eluting material 11 disposed therein, a water supply pipe 12 for introducing raw water such as tap water into the water tank 10, and a water intake pipe 14 for intaking mineral water made in the water tank 10; and an acidic food additive is disposed in the water tank 10. Since the acid concentration in the water tank 10 thereby rises, the mineral-eluting efficiency of the mineral eluting material 11 is improved, and the mineral concentration is elevated.

EP 1 547 979 A1

## Description

The present invention relates to a mineral water making apparatus for making mineral water by adding mineral components to raw water.

Heretofore, as a mineral water making apparatus of this kind, an apparatus wherein mineral stone and a filter medium for removing foreign substances are placed in a water tank has been commonly used. When raw water such as tap water is passed through the water tank, mineral components are added to the tap water, and drinking water containing minerals is provided.

However, the quantity of mineral components actually added to the drinking water in such a mineral water making apparatus is extremely small (quantity of added mineral components: 50 ppm or less as general hardness (GH)), which is unsatisfactory as mineral-containing drinking water.

In order to solve such a problem, a mineral water making apparatus disclosed in Japanese Patent Application Laid-Open No. 6-190379 (1994) was proposed. In this mineral water making apparatus, since carbon dioxide gas was injected into tap water to increase the concentration of free carbon dioxide, and the tap water was brought into contact with a porous body supporting calcium carbonate, the mineral component was eluted in short time, and mineral-containing drinking water of a desired mineral concentration could be made and provided.

However, this mineral water making apparatus had a problem in that a gas cylinder for injecting carbon dioxide gas was required, increasing the costs and enlarging the size of the apparatus. In addition, since the quality of raw water affected the eluting rate of the mineral components, the apparatus had another problem in that it could not maintain the mineral concentration. Furthermore, the apparatus had another problem in that the mineral components deposited in the water intake pipe when the mineral concentration elevated needlessly.

In view of the above-described problems in conventional mineral water making apparatuses, the object of the present invention is to provide a mineral water making apparatus of a simple structure that can improve the mineral elution rate of the mineral eluting material, can maintain the mineral concentration of mineral water constant, and can inhibit the deposition of the mineral components.

The invention is a mineral water making apparatus comprising a water tank having a mineral eluting material disposed therein, a water supply pipe for introducing raw water such as tap water into the water tank, and a water intake pipe for intaking mineral water made in the water tank; wherein an acidic food additive is disposed in the water tank.

According to the invention, since both the mineral eluting material and the acidic food additive are disposed in the water tank, the water in the water tank is constantly acidified, and mineral water of a high mineral concentration can be made in short time. The mixture of the mineral eluting material and the acidic food additive may also be disposed.

In the drawings:

FIG. 1 is a water circuit diagram showing a mineral water making apparatus according to an embodiment of the present invention;
FIG. 2 is a water circuit diagram showing a mineral water making apparatus according to an alternative embodiment;
FIG. 3 is a front sectional view showing a mineral water making apparatus according to the alternative embodiment in Fig. 2;
FIG. 4 is a side sectional view showing a mineral water making apparatus according to the alternative embodiment in Fig. 2;
FIG. 5 is an enlarged sectional view showing a mixture according to the alternative embodiment in Fig. 2; and

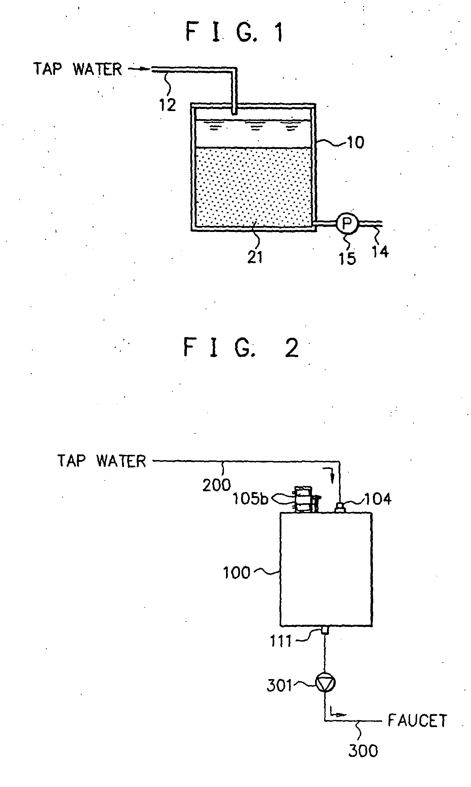

FIG. 1 shows an embodiment of a mineral water making apparatus according to the present invention.

The mineral water making apparatus has a water tank 10 for making mineral water. A mineral eluting material 11 is disposed in the water tank 10. As the mineral eluting material 11, powdered or granulated coral sand, Mai-fan-shih (healstone), mineral stone and the like are used. By passing water through the mineral eluting material 11, mineral components are eluted into the water, and mineral water is made.

A water-supply pipe 12 is linked to the upper portion of the water tank 10, and tap water (raw water) is supplied into the water tank 10 through the water-supply pipe 12.

A water intake pipe 14 connected to a faucet or the like is linked to the lower portion of the water tank 10. A pump 15 is installed in a water intake pipe 14. while a pump 15 is activated, mineral water made in the water tank 10 is supplied to the faucet through the water intake pipe 14.

Calcium carbonate ($CaCO_3$) is used as the mineral eluting material 11, it causes the following chemical reaction:

$$CaCO_3 + 2H+ \rightarrow Ca^{2+} + H_2O + CO_2$$

By the elution of mineral ions ($Ca^{2+}$) as described above, drinking water having a high mineral concentration can be made.

The increase of the level of acid water improves the rate of mineral elution of the mineral eluting material 11.

Specifically, as well as a granulated or powdered acidic food additive, a granulated or powdered mineral eluting material is mixed to form a mixture 21, and the mixture 21 is disposed in the water tank 10. As the acidic food additive, for example, citric acid, DL-malic acid, phosphoric acid, and fumaric acid, is used. Of these acidic food additives, citric acid and DL-malic acid have the effect of improving the intake efficiency of mineral components when the mineral water is taken in human bodies. According to the invention, the eluted minerals can be easily acidified, and mineral water having a high mineral concentration can be made.

FIGS. 2 to 5 show another embodiment of a mineral water making apparatus according to the present invention. In the above-described embodiment, only the mixture 21 is disposed in the water tank 10. Whereas in this embodiment, an electrode for eluting minerals is disposed in the water tank as well as a mineral eluting material, and a solid acidic food additive is used. A mineral water making apparatus according to this embodiment will be described referring to FIGS. 2 to 5.

The mineral water making apparatus has a water tank 100, a water-supply pipe 200 for supplying raw water such as tap water into the water tank 100, and a water-intake pipe 300 for guiding the mineral water made in the water tank 100 to a faucet (not shown) using a pump 301.

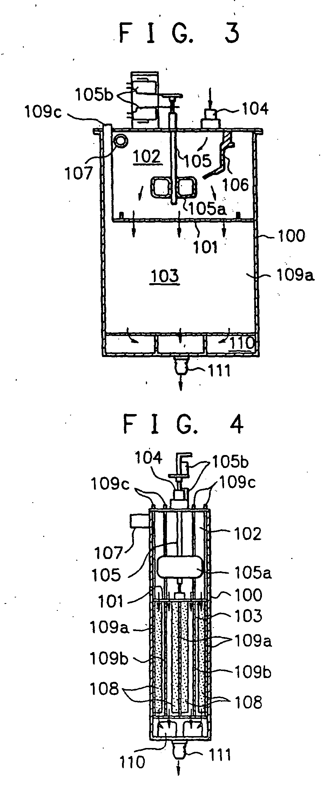

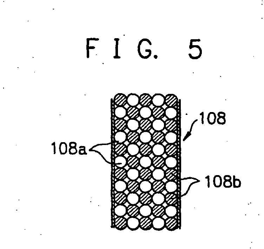

First, the structure of the water tank 100 will be described in detail referring to FIGS. 3 and 4. The water tank 100 is formed in a flat box shape, and the interior thereof is substantially divided into upper and lower portions by a diaphragm 101 that can pass water. Above the diaphragm 101, a water storage chamber 102 for supplying tap water is formed. Below the diaphragm 101, an electrolysis chamber 103 for electrolyzing water is formed.

A water conduit tube 104 to be connected to the water-supply pipe 200 is installed on the upper plate of the water storage chamber 102, and tap water is introduced into the water storage chamber 102 through the water conduit tube 104. A water-level detector 105 is installed in the water storage chamber 102. The water-level detector 105 has a structure to detect the up-and-down motion of a float 105a using upper and lower micro-switches 105b. The supply and stop of tap water is controlled on the basis of detection signals from each of the micro-switches 105b to maintain the water level in the water storage chamber 102 as predetermined. A guide plate 106 is also installed in the water storage chamber 102. The guide plate 106 guides tap water supplied from the water conduit tube 104 toward the central portion of the water storage chamber 102, so that the tap water flows from the central portion of the water storage chamber 102 to the entire water storage chamber 102. The reference numeral 107 denotes an overflow pipe for draining water exceeding the allowable quantity.

A plurality of mixtures 108 and a plurality of positive and negative pairs of electrodes for eluting minerals 109a and 109b are alternately disposed in the electrolysis chamber 103. The terminal 109c of each electrode 109a and 109b passes through the diaphragm 101 and protrudes from the upper plate of the water storage chamber 102 to be connected to the power supply.

The mixture 108 is composed of a mineral eluting material 108a and a conductive material 108b as shown in FIG. 5. As the mineral eluting material 108a, powdered or granulated coral sand, healstone, mineral stone or the like is used. On the other hand, as the conductive material 108b, any one of powdered activated charcoal, granulated activated charcoal, fibrous activated charcoal, wood charcoal, carbon black, a gold-, silver-, or platinum-based metal; or the mixture thereof is used. Since a carbon-based, or gold-, silver-, or platinum-based metal is used as the conductive material 108b, even if the conductive material is eluted, it is harmless to human bodies. If activated charcoal is used as the conductive material 108b, the activated charcoal may be coated with silverto improve electric conductivity. Although the mixture 108 is composed of the mineral eluting material 108a and the conductive material 108b, as described above, water can pass through the mixture 108. In order to facilitate assembly and maintenance, the mixture 108 may be filled in a water-permeable container in advance, and the container may be disposed in the electrolysis chamber 103. In this case, the container filled with powdered or granulated mineral eluting material 108a and the conductive material 108b is used.

A DC voltage from a DC power source (not shown) is impressed between one electrode for eluting minerals 109a and the other electrode for eluting minerals 109b, and the one electrode for eluting minerals 109a constitutes a positive electrode, and the other electrode for eluting minerals 109b constitutes a negative electrode. The voltage, polarity, impressing time and the like of the DC power source are controlled by the control unit (not shown).

While a DC voltage is applied between the electrodes for eluting minerals 109a and 109b of the mineral water making apparatus according to this embodiment, in the side of the electrode for eluting minerals 109a, which is the positive electrode, water reacts as follows:

$$2H_2O \rightarrow 4H^+ + O_2 + 4e^-$$

Thus, the hydrogen ion concentration of the water in the positive electrode side rises to generate acidic water. On the other hand, in the side of the electrode for eluting minerals 109b, which is the negative electrode, water reacts as follows:

$$4H_2O + 4e^- \rightarrow 2H_2 + 40H^-$$

Thus, alkaline water is generated in the negative electrode side. when calcium carbonate ($CaCO_3$) is used as the mineral eluting material 108a, the calcium carbonate reacts with acidic water as follows:

$$CaCO_3 + 2H^+ \rightarrow Ca^{2+} + H_2O + CO_2$$

Thus, mineral ions ($Ca^{2-}$) are eluted.

Here, since the mineral eluting material 108a is an insulator, it may act as the factor to lower conductivity between the electrodes for eluting minerals 109a and 109b. However, since a conductive material 108b is mixed with the mineral eluting material 108a in the mineral water making apparatus of this embodiment, the efficiency of electrolysis is not lowered, and furthermore, the efficiency of mineral eluting is not lowered.

A confluence chamber 110 for combining the mineral water generated in the electrolysis chamber 103 is disposed on the lower portion of the water tank 100. The mineral water flowing in the confluence chamber 110 flows down to the water-intake pipe 300 through the derivation pipe 111.

According to this embodiment, mineral components are eluted from the mineral eluting material 108a by impressing a DC voltage between electrodes for eluting minerals 109a and 109b. when the pump 301 is activated, tap water flows as arrows in FIGS. 2 to 4 show, and mineral water flows to the faucet.

**Claims**

1. A mineral water making apparatus comprising:

   a water tank (10, 100) having a mineral eluting material (11) disposed therein;
   a water supply pipe (12, 200) for introducing raw water such as tap water into said water tank and
   a water intake pipe (14,300) for intaking mineral water made in said water tank;

   wherein an acidic food additive is disposed in said water tank.

2. The mineral water making apparatus according to claim 1, wherein a pair of positive and negative electrodes (109a,109b) supplied with a direct-current voltage for eluting minerals are installed in said water tank (10,100).

3. The mineral water making apparatus according to claim 2, wherein a conductive material (108b) is disposed in said water tank (10,100).

# F I G. 1

TAP WATER

12

10

21

P

15   14

# F I G. 2

TAP WATER

200

105b   104

100

111

301

FAUCET

300

## F I G. 3

## F I G. 4

# F I G. 5

**European Patent Office**

## EUROPEAN SEARCH REPORT

Application Number

EP 04 02 8074

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | PATENT ABSTRACTS OF JAPAN vol. 0185, no. 42 (C-1261), 17 October 1994 (1994-10-17) -& JP 06 190379 A (MATSUSHITA ELECTRIC IND CO LTD), 12 July 1994 (1994-07-12) * abstract * ----- | 1-3 | C02F1/68 A23L2/68 C02F1/461 |
| X | PATENT ABSTRACTS OF JAPAN vol. 1997, no. 10, 31 October 1997 (1997-10-31) -& JP 09 164390 A (MATSUSHITA ELECTRIC IND CO LTD), 24 June 1997 (1997-06-24) * abstract * ----- | 1-3 | |
| P,X | PATENT ABSTRACTS OF JAPAN vol. 2003, no. 07, 3 July 2003 (2003-07-03) -& JP 2003 062574 A (SANDEN CORP), 4 March 2003 (2003-03-04) * abstract * ----- | 1-3 | |
| X | WO 99/40801 A (AGRONOMIQUE INST NAT RECH ; REMESY CHRISTIAN (FR)) 19 August 1999 (1999-08-19) * page 4, lines 1-20 * ----- | 1 | TECHNICAL FIELDS SEARCHED (Int.Cl.7) C02F A23L |

~~The present search report has been drawn up for all claims~~

| Place of search | Date of completion of the search | Examiner |
|---|---|---|
| Munich | 26 January 2005 | Borello, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 02 8074

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2005

| Patent document cited in search report | | Publication date | Patent family member(s) | | Publication date |
|---|---|---|---|---|---|
| JP 06190379 | A | 12-07-1994 | NONE | | |
| JP 09164390 | A | 24-06-1997 | NONE | | |
| JP 2003062574 | A | 04-03-2003 | NONE | | |
| WO 9940801 | A | 19-08-1999 | FR | 2774557 A1 | 13-08-1999 |
| | | | AU | 2285599 A | 30-08-1999 |
| | | | WO | 9940801 A1 | 19-08-1999 |
| | | | US | 6461650 B1 | 08-10-2002 |